# EUROPEAN PATENT SPECIFICATION

(11) **EP 1 642 508 B1**
(45) Date of publication and mention of the grant of the patent: **28.05.2008**
(21) Application number: 04425741.8
(22) Date of filing: 04.10.2004
(51) Int. Cl.: A23N 12/00

(54) **A machine for toasting granular food material, such as hazelnuts and the like**
Vorrichtung zum Rösten von körnigen Lebensmitteln wie Haselnüsse
Appareil pour le grillage de produits alimentaires granulaires comme des noisettes ou similaires

(43) Date of publication of application: 05.04.2006
(73) Proprietor: SOREMARTEC S.A., 6700 Schoppach-Arlon (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Sobrero, Giovanni, 12050 Cerretto Langhe (Cuneo) (IT); Traversa, Flavio, 12050 Magliano Alfieri (Cuneo) (IT)
(74) Representative: Rambelli, Paolo

(56) References cited:
- EP-A- 0 965 279
- CH-A- 515 688
- DE-A1- 4 100 069

## Description

The present invention relates to a machine for toasting granular food material, such as hazelnuts and the like.

In the art, such granular material is toasted by heating it in devices, known as toasters, which may be configured in various ways, for example rotating cylinders, drums, belts and the like.

Generally speaking, cylinders and drums make it possible to toast large quantities of material in a relatively short time, but do not allow this process to be continuous. In addition, it is often difficult to ensure that the items are toasted evenly. Belt toasters enable the process to be continuous but in order to handle large quantities they need to have very long toasting chambers and therefore take up a lot of space.

EP-A-965 279 discloses a machine for toasting granular food items according to the preamble of claim 1.

The object of the present invention is to provide a toasting machine which can operate continuously and is also able to process relatively large quantities of material.

This object is achieved according to the invention by providing a machine for toasting granular food items, such as hazelnuts and the like, characterised in that it includes closed loop conveyor means, operable to transport the said items along a processing path, and in which the conveyor means include static confinement means, which define a volume for receiving the granular material, extending along at least one portion of the said path, and driving means advancing, in the said confinement volume, which cause the material to advance through this volume between the said confinement means, and heating means, operable to heat the advancing granular material, arranged along the said at least one portion of the said confinement volume.

In a machine thus configured, the material is directed along at least part of its processing path and is heated during this passage. This means that a relatively large quantity of material can be treated in a continuous manner.

According to a preferred characteristic, the conveyor means are arranged so that their path of travel includes at least one portion along which the material is forced to advance as a whole in a substantially vertical direction. In this way toasting occurs along the ascending and/or descending portion of the processing path, which follows a sinuous substantially vertical configuration. The length of the path along which the material is subject to heating can even be long without the machine needing to take up too much space.

According to another preferred characteristic, the vertical path of travel includes ascending portions, along which the closed-loop conveyor means push the material along the path of travel, and descending portions along which the closed-loop conveyor means support the material along the path of travel.

According to a further preferred characteristic, the conveyor means include a plurality of roller means, the said driving means substantially including a pair of closed loop transmission means, arranged parallel to one another along the said path of travel and operable to engage the roller means, and a plurality of transverse elements, for connecting the transmission means to each other, the said confinement means comprising containment walls, cooperating with the said closed loop transmission means and the said transverse elements defining collecting compartments along the said confinement space.

According to another characteristic of the invention, the containment walls are configured as cages, thereby making it easier to heat the material and remove any fragments.

According to a further preferred characteristic of the invention, the distance between the walls is substantially of the same order of magnitude as the average size of the granular items to be conveyed. The material therefore advances in a single layer, making it possible to toast the items substantially evenly.

It is preferable if the heating means comprise electrical resistances. Alternatively, these heating means could comprise a closed system of pipes carrying a hot fluid.

An additional object of the invention is to provide a method for toasting granular material, in particular hazelnuts, using a toasting machine according to the invention.

A preferred but non-limitative embodiment of the invention will now be described with reference to the appended drawings, in which:

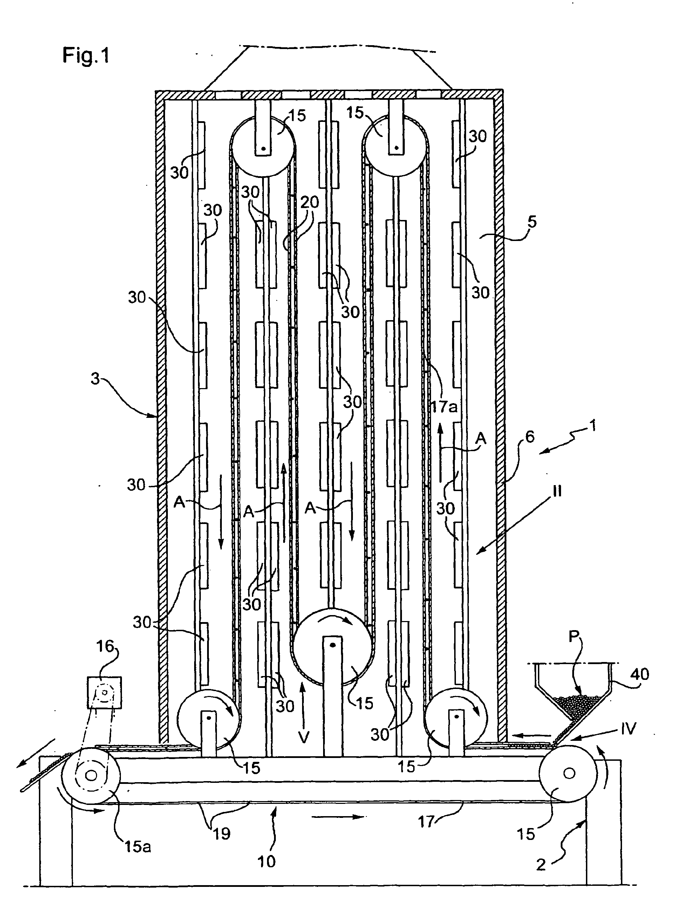

Figure 1 is a schematic, sectioned view of a machine for toasting granular material according to the present invention;
Figure 2 is a view of a detail of the machine of Figure 1, indicated in this drawing by the arrow II;
Figure 3 is a schematic perspective view of a detail of Figure 2, in which it is indicated by the arrow III;
Figure 4 is a view of a detail of the machine of Figure 1, in which it is indicated by the arrow IV; and
Figure 5 is a view of a detail of the machine of Figure 1, in which it is indicated by the arrow V.

A machine for toasting granular material according to the invention is generally indicated 1. This machine includes a lower portion 2, constituting the support base of the whole machine, and an upper portion 3 with a toasting chamber 5 defined therein by a wall 6.

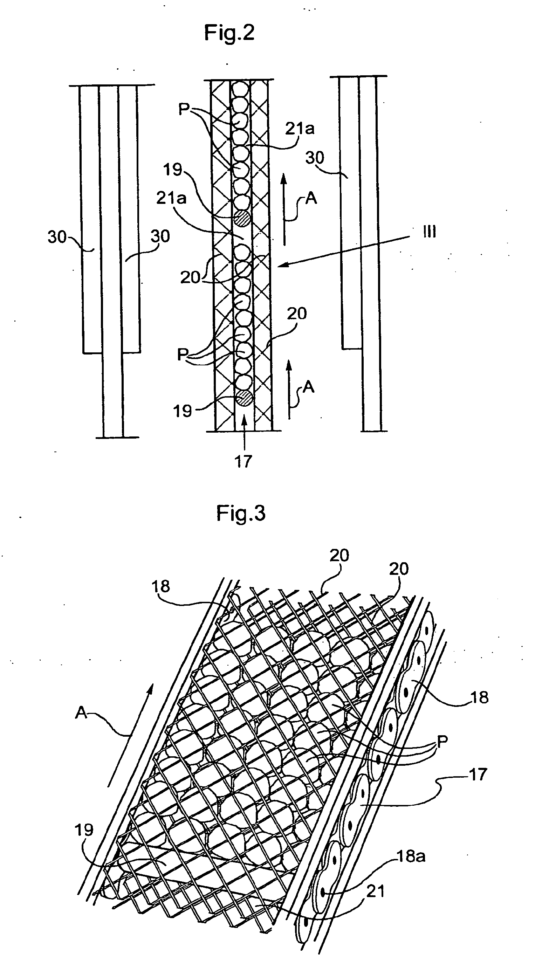

The machine 1 includes closed loop conveyor means 10. These conveyor means 10 include a plurality of roller members 15, at least one of which can be rotated by a motor 16 and is indicated 15a. The conveyor means 10 also include drive means 17 operable to advance the granular items and illustrated more clearly in Figures 2 and 3. These drive means 17 comprise a pair of transmission chains 18 of a known type, arranged alongside each other, and by a plurality of transverse members 19 connecting the chains 18 to each other and distributed evenly along the longitudinal extent of the chains 18. These transverse members 19 are preferably connected to the chains 18 so as to be secured to and coaxial with some of the pins 18a through the chains 18.

The chains 18 are made to advance along the direction of advance indicated A in the drawings by means of teeth (not shown) arranged around the circumference of the ends of the rollers 15 for meshing with the respective chains 18. The drive roller 15a and the other return rollers 15 are arranged on the machine 1 so as to form a sinuous path for the drive means 17. In particular, inside the toasting chamber 5 at least one portion 17a of the drive means 17, extending between two consecutive rollers 15 is vertical or at least inclined to the horizontal and almost perpendicular thereto.

The conveyor means 10 also include a pair of opposite containment walls 20, which define a volume 21 for receiving the granular items, extending over at least part of the path of the chains 18. The containment walls 20 are arranged adjacent the chains 18 along at least one portion thereof, in such a way that the drive means 17 are caused to advance through the containment volume 21.

In particular, such a pair of opposite containment walls 20 is arranged beside each vertical portion 17a of the chains 18. Each wall 20 of the pair is arranged so as to face the assembly formed by the chains 18 and transverse members 19 from its perspective part. This means that the assembly of chains 18 and transverse members 19 forms a substantially sandwich-like structure with the walls 20, in which the chains 18 and transverse members 19 are slidably interposed between the walls 20. These walls 20 are secured to the upper part 3 of the machine 1. The spacing between the walls 20 and the thickness of the chains 18 and the transverse members 19 interposed between them is calculated to enable the granular items to be transported in the confinement cavity or volume 21 between the two walls 20. In cooperation with the corresponding pair of adjacent walls 20, the chains 18 and the transverse members 19 define a series of collecting spaces 21a, each able to hold a predetermined number of the items P. These holding spaces 21a constitute sections of the confinement volume 21. More accurately, each collecting space 21a is limited along the longitudinal direction A of the chains 18 by two consecutive transverse members 19, thickness wise by the containment walls 20, and width wise by the lateral chains 18.

Heating means 30 are located along the vertical portion 17a of the path of the chains 18 for heating the granular items. These heating means are preferably constituted by electrical resistances, but other systems could be used provided they do not cause air turbulence in the toasting chamber 5, such as closed circuit pipes circulating hot air not coming into direct contact with the items.

The containment walls 20 must of course be made of a material with good thermal conductivity, in order to facilitate the toasting process. These walls 20 are preferably constructed as a cage, thereby also making it easier to remove any particles left by the items.

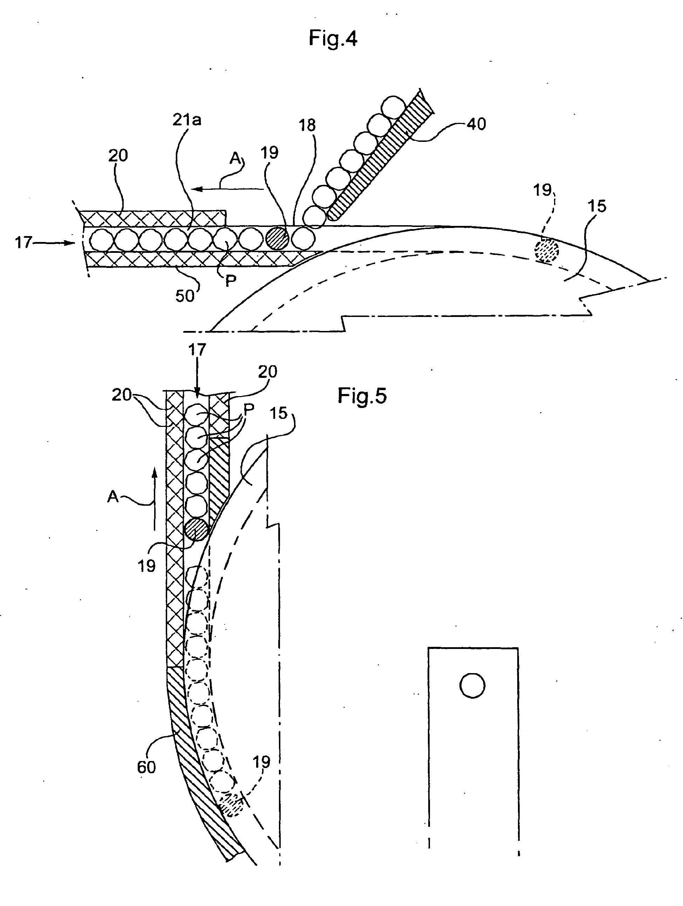

As shown in Figure 4, the conveyor means can be loaded by a hopper 40 of a type known in the art, arranged beside an opening in the confinement volume 21 outside the toasting chamber 5 for pouring the items into the collecting spaces 21a between consecutive transverse members 19, along a portion where the chains 18 are substantially horizontal, or at least only slightly inclined. A base surface 50 is of course arranged beneath the transverse members 19 in order to support the granular items within the collecting spaces 21a.

As shown in Figure 5, additional containment walls 60 are provided in the region of the path where the items advance over the rollers 15 and the drive means 17 are obliged to curve. These containment walls 60 are preferably of a different type from the walls 20, made of curved metal sheet, for example, so as to prevent any granular items becoming wedged along the curved portion of the path. In this area, the walls 60 cooperate with the radially outer surface of the respective rollers 15 to direct the items along the path A.

It is preferable if the distance between the walls 20 of each pair pf containment walls, and that between the walls 60 and the corresponding radially outer surfaces of the rollers 15, are substantially of the same order of magnitude as the average size of the items, so that only one layer of items can be conveyed, as shown in Figures 2 to 5. This ensures that the items P are evenly toasted from both sides.

Along the vertical portions, the conveyor means 10 essentially work as a chain elevator. In particular, along the upward portions the transverse members 19 act to push the product along the processing path, while along descending portions the transverse members 19 provide support for grains in the space above.

It is clear that the embodiments described here should be considered to be non-limitative examples; various changes can be made to the shape and arrangement of parts and to construction and operating details, according to the requirements of those skilled in the art, without departing thereby from the scope of the invention.

## Claims

1. A machine (1) for toasting granular food items (P) such as hazelnuts or the like,
including closed loop transport means (10), operable to convey the said granular items along a path of advancement and heating means (30) **characterised in that** these transport means include static confinement means (20) which define a volume (21) extending along at least one portion of the said path, for receiving the granular items, and drive means (17) advancing through the said confinement volume, which cause the granular items to move forwards in the said space, within the said containment means, and **in that** the
heating means (30) are disposed along the said at least one portion of the said confinement means and operable to heat the advancing granular items.

2. A machine according to Claim 1, in which the said transport means (10) are arranged in such a way that their path of advancement includes at least one portion (17a) in which the granular items (P) are constrained to advance substantially vertically as a whole, and in which the heating means (30) are arranged along the said at least one vertical portion (17a) of vertical advancement.

3. A machine according to Claim 2, in which the said at least one vertical portion (17a) of vertical advancement includes ascending portions, in which the drive means (17) push the material (P) along the processing path, and descending portions, in which the said drive means (17) provide support for the product (P) along the said processing path.

4. A machine according to any Claim from 1 to 3, in which the said transport means (10) include a plurality of roller members (15), the said drive means (17) substantially including a pair of closed loop transmission members (18) arranged parallel the one to the other along the said path of advancement and engageable with the said roller members (15), and a plurality of transverse elements (19) able to connect the transmission members (18) to each other, and the said confinement means comprising containment walls (20), which cooperate with the said closed loop transmission members (18) and the said transverse elements (19) to define collecting spaces (21a) in the said confinement volume.

5. A machine according to Claim 4, in which the said containment walls (20) are each formed as a cage.

6. A machine according to Claim 4 or Claim 5, in which the distance between the walls (20) is substantially of the same order of magnitude as the average size of the granular items to be transported, in such a way that the granular items are transported in a single layer.

7. A machine according to any preceding Claim, in which the said heating means (30) comprise electrical resistances.

8. A machine according to any of Claims 1 to 6, in which the said heating means (30) comprise closed circuit pipes carrying a hot fluid.

9. A method for toasting granular food items using a machine according to any of Claims 1 to 8.

10. A method according to Claim 9, in which these items are carried along in a single layer interposed between walls (20) for containing the said transport means.

11. A method according to Claims 9 or 10, in which the granular food material is constituted by hazelnuts, and in which the heating means are operable to toast the said nuts.

## Patentansprüche

1. Maschine (1) zum Rösten von körnigen Lebensmitteln (P) wie Haselnüssen oder ähnlichem, umfassend
eine einen geschlossenen Kreislauf bildende Transportvorrichtung (10), die betätigbar ist, um die körnigen Lebensmittel entlang eines Vorschubwegs zu fördern, sowie Heizmittel (30), **dadurch gekennzeichnet, dass**
diese Transportvorrichtung statische Eingrenzungsmittel (20) umfasst, die ein sich entlang mindestens eines Abschnitts des Wegs erstreckendes Volumen (21) zur Aufnahme der körnigen Lebensmittel definieren, sowie durch das Eingrenzungsvolumen vorrückende Antriebsmittel (17) umfasst, welche die körnigen Lebensmittel veranlassen, sich in dem Raum innerhalb der Eingrenzungsmittel vorwärts zu bewegen, und dass
die Heizmittel (30) entlang des mindestens einen Abschnitts der Eingrenzungsmittel angeordnet sind und betätigbar sind, um die vorrückenden körnigen Lebensmittel zu erhitzen.

2. Maschine nach Anspruch 1, wobei die Transportvorrichtung (10) auf solche Weise angeordnet ist, dass ihr Vorschubweg mindestens einen Abschnitt (17a) umfasst, in dem die körnigen Lebensmittel (P) so eingeschränkt sind, dass sie sich im Wesentlichen vertikal als Ganzes vorwärts bewegen, und wobei die Heizmittel (30) entlang des mindestens einen vertikalen Abschnitts (17a) der vertikalen Vorwärtsbewegung angeordnet sind.

3. Maschine nach Anspruch 2, wobei der mindestens einen vertikale Abschnitt (17a) der vertikalen Vorwärtsbewegung ansteigende Abschnitte umfasst, in denen die Antriebsmittel (17) das Material (P) entlang des Verarbeitungswegs schieben, und absteigende Abschnitte umfasst, in denen die Antriebsmittel (17) eine Stütze für das Produkt (P) entlang des Verarbeitungswegs bereitstellen.

4. Maschine nach einem der Ansprüche 1 bis 3, wobei die Transportvorrichtung (10) eine Vielzahl von Walzengliedern (15) umfasst, wobei die Antriebsmittel (17) im Wesentlichen ein Paar von einen geschlossenen Kreis bildenden Übertragungsgliedern (18) umfassen, die parallel zueinander entlang des Vorschubwegs angeordnet sind und mit den Walzengliedern (15) in Eingriff bringbar sind, sowie eine Vielzahl von Querelementen (19) umfasst, die in der Lage sind, die Übertragungsglieder (18) miteinander zu verbinden, und wobei die Eingrenzungsmittel Begrenzungswände (20) umfassen, die mit den geschlossenen Übertragungsgliedern (18) und den Querelementen (19) zusammenwirken, um Sammelräume (21a) in dem Eingrenzungsvolumen zu definieren.

5. Maschine nach Anspruch 4, wobei die Begrenzungswände (20) jeweils als Käfig ausgebildet sind.

6. Maschine nach Anspruch 4 oder Anspruch 5, wobei der Abstand zwischen den Wänden (20) im Wesentlichen dieselbe Größenordnung besitzt wie die durchschnittliche Größe der zu transportierenden körnigen Lebensmittel, und zwar auf solche Weise, dass die körnigen Lebensmittel in einer einzigen Lage transportiert werden.

7. Maschine nach einem der vorangehenden Ansprüche, wobei die Heizmittel (30) elektrische Widerstände umfassen.

8. Maschine nach einem der Ansprüche 1 bis 6, wobei die Heizmittel (30) einen geschlossenen Kreislauf aus ein heißes Fluid führenden Rohren umfassen.

9. Verfahren zum Rösten von körnigen Lebensmitteln unter Verwendung einer Maschine nach einem der Ansprüche 1 bis 8.

10. Verfahren nach Anspruch 9, wobei diese Lebensmittel in einer einzigen Lage zwischen Wänden (20) zur Aufnahme der Transportvorrichtung entlang befördert werden.

11. Verfahren nach Anspruch 9 oder 10, wobei das körnige Lebensmittelmaterial aus Haselnüssen besteht, und wobei die Heizmittel betätigbar sind, um die Nüsse zu rösten.

## Revendications

1. Machine (1) pour griller des produits alimentaires granulaires (P) tels que des noisettes ou analogues, comprenant des moyens de transport en boucle fermée (10) aptes à transporter lesdits produits granulaires le long d'une trajectoire de progression et des moyens de chauffage (30), **caractérisée en ce que** les moyens de transport comprennent des moyens de confinement statiques (20) qui définissent un volume (21) s'étendant le long d'au moins une partie de ladite trajectoire, pour recevoir les produits granulaires, et des moyens d'entraînement (17) progressant au travers dudit volume de confinement, qui amènent les produits granulaires à se déplacer vers l'avant dans ledit espace, au sein desdits moyens de confinement, et **en ce que** les moyens de chauffage (30) sont disposés le long de ladite au moins une partie desdits moyens de confinement et sont aptes à chauffer les produits granulaires en progression.

2. Machine selon la revendication 1, dans laquelle lesdits moyens de transport (10) sont agencés de manière que leur trajectoire de progression comprenne au moins une partie (17a) dans laquelle les produits granulaires (P) sont contraints de progresser sensiblement verticalement en bloc, et dans laquelle les moyens de chauffage (30) sont agencés le long de ladite au moins une partie verticale (17a) de progression verticale.

3. Machine selon la revendication 2, dans laquelle ladite au moins une partie verticale (17a) de progression verticale comprend des parties ascendantes, dans lesquelles les moyens d'entraînement (17) poussent la matière (P) le long de la trajectoire de traitement, et des parties descendantes, dans lesquelles lesdits moyens d'entraînement (17) offrent un support pour le produit (P) le long de ladite trajectoire de traitement.

4. Machine selon l'une quelconque des revendications 1 à 3, dans laquelle lesdits moyens de transport (10) comprennent une pluralité d'éléments formant rouleaux (15), lesdits moyens d'entraînement (17) comprenant sensiblement une paire d'éléments de transmission en boucle fermée (18) agencés parallèlement les uns aux autres le long de ladite trajectoire de progression et aptes à être engagés avec lesdits éléments formant rouleaux (15), et une pluralité d'éléments transversaux (19) aptes à relier les éléments de transmission (18) l'un à l'autre, et lesdits moyens de confinement comprenant des parois de confinement (20), qui coopèrent avec lesdits éléments de transmission en boucle fermée (18) et lesdits éléments transversaux (19) pour définir des espaces de collecte (21a) dans ledit volume de confinement.

5. Machine selon la revendication 4, dans laquelle lesdites parois de confinement (20) sont chacune formées en une cage.

6. Machine selon la revendication 4 ou la revendication 5, dans laquelle la distance entre les parois (20) est sensiblement du même ordre de grandeur que la dimension moyenne des produits granulaires à transporter, de manière que les produits granulaires soient transportés en une seule couche.

7. Machine selon l'une quelconque des revendications précédentes, dans laquelle lesdits moyens de chauffage (30) comprennent des résistances électriques.

8. Machine selon l'une quelconque des revendications 1 à 6, dans laquelle lesdits moyens de chauffage (30) comprennent des conduits en circuit fermé transportant un fluide chaud.

9. Procédé pour griller des produits alimentaires granulaires en utilisant une machine selon l'une quelconque des revendications 1 à 8.

10. Procédé selon la revendication 9, dans lequel lesdits produits sont transportés en une seule couche intercalée entre les parois (20) pour confiner lesdits moyens de transport.

11. Procédé selon la revendication 9 ou 10, dans lequel la matière alimentaire granulaire est constituée de noisettes, et dans lequel les moyens de chauffage sont aptes à griller lesdites noisettes.
